(19) Europäisches Patentamt
European Patent Office
Office européen des brevets

(11) **EP 3 857 166 B1**

(12) **EUROPEAN PATENT SPECIFICATION**

(45) Date of publication and mention
of the grant of the patent:
**21.08.2024 Bulletin 2024/34**

(21) Application number: **19864627.5**

(22) Date of filing: **24.09.2019**

(51) International Patent Classification (IPC):
**G01B 17/02** (2006.01)   **G01N 29/04** (2006.01)
**G01N 29/22** (2006.01)   *G01N 29/07* (2006.01)
**G01N 29/32** (2006.01)

(52) Cooperative Patent Classification (CPC):
**G01N 29/07; G01B 17/02; G01N 29/326;**
G01N 2291/02854

(86) International application number:
**PCT/US2019/052526**

(87) International publication number:
**WO 2020/068710 (02.04.2020 Gazette 2020/14)**

(54) **A SYSTEM FOR MONITORING A THICKNESS OF ONE OR MORE ASSETS USING AN ULTRASONIC MEASUREMENT SYSTEM, A MULTIPLEXER SWITCH MODULE AND A TWO-CONDUCTOR CONNECTION, AND A METHOD OF PERFORMING THE SAME**

SYSTEM ZUR ÜBERWACHUNG EINER DICKE EINES ODER MEHRERER GÜTER UNTER VERWENDUNG EINES ULTRASCHALLMESSSYSTEMS, EINES MULTIPLEXER-SCHALTERMODULS UND EINER ZWEILEITERVERBINDUNG UND VERFAHREN ZU DESSEN DURCHFÜHRUNG

SYSTÈME POUR SURVEILLER L'ÉPAISSEUR D'UN OU DE PLUSIEURS BIEN(S) À L'AIDE D'UN SYSTÈME DE MESURE ULTRASONORE, D'UN MODULE DE COMMUTATION DE MULTIPLEXEUR ET D'UNE CONNEXION À DEUX CONDUCTEURS, ET PROCÉDÉ DE MISE EN OEUVRE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2018 US 201862735564 P**
**22.03.2019 PCT/US2019/023613**

(43) Date of publication of application:
**04.08.2021 Bulletin 2021/31**

(73) Proprietor: **Molex, LLC**
**Lisle, IL 60532 (US)**

(72) Inventors:
• **KLOZA, Mariusz**
**Lisle, Illinois 60532 (US)**

• **VELARDE, Ray**
**Lisle, Illinois 60532 (US)**
• **CHERNYSHOV, Alexander S.**
**Lisle, Illinois 60532 (US)**

(74) Representative: **Ter Meer Steinmeister & Partner Patentanwälte mbB**
**Nymphenburger Straße 4**
**80335 München (DE)**

(56) References cited:
**JP-A- H11 118 457       JP-A- H11 118 457**
**US-A- 3 929 006        US-A1- 2003 150 273**
**US-A1- 2004 255 678     US-A1- 2011 245 677**
**US-A1- 2011 245 677     US-A1- 2014 331 771**
**US-A1- 2016 109 411**

**Description**

TECHNICAL FIELD

The present disclosure relates generally to ultrasonic measurement systems that monitor for wall thinning in refineries, pipelines, paper mills, power plants and other heavy industry plants. The present disclosure more particularly relates to a system of monitoring a thickness of one or more assets using an ultrasonic measurement system, a multiplexer switch module and a two-conductor connection, and a method of performing the same.

BACKGROUND

US 2004/255678 A1 describes a nondestructive apparatus that uses a guided wave. The nondestructive apparatus has a waveform forming apparatus for forming a transmission waveform by employing a reference waveform, a transmitting element for generating the guided wave within an object under inspection based upon the transmission waveform, a receiving element for receiving a reflection wave of the guided wave from an inspection region of the object under inspection, an analyzing apparatus for outputting inspection information which is acquired based upon the reception waveform of the reflection wave received by the receiving element, and the display apparatus for displaying the inspection information.

US 2016/109411 A1 describes an ultrasound sensing system for monitoring the condition or integrity of a structure, comprising (a) a plurality of ultrasound sensors, each sensor being configured to receive at least one first electrical signal, transmit an ultrasound signal in response to the first electrical signal, receive at least one reflected ultrasound signal, and transmit a second electrical signal in response to the reflected ultrasound signal, the first and second electrical signals being analog; (b) at least one digital sensor interface (DSI) to which at least a portion of the sensors are connectable, the DSI being configured to transmit the first electrical signal and receive the second electrical signal, and to generate an A-scan signal based on the first and second electrical signals for each sensor, the DSI having circuitry for transmitting a digital signal based directly or indirectly on at least the A-scan signal, the digital signal including an address corresponding to the at least one DSI; (c) a digital bus configured to receive the digital signal from the at least one DSI; (d) a user interface connected to the bus to receive the digital signal; and wherein the sensors are mounted semi-permanently on the structure and the DSI is also mounted semi-permanently on or adjacent to the structure being monitored.

JP H11 118457 A describes a plurality of ultrasonic oscillator units each comprising a ultrasonic wave retarding material and an ultrasonic oscillator that are arranged one- or two-dimensionally to obtain arrays of ultrasonic probes. Ultrasonic pulse signals are sequentially allocated to the plurality of ultrasonic oscillator units of each of the arrays of ultrasonic probes by means of a time sharing switch, and the thickness of a coat is measured using the pulse signals reflected from the coat. The subjects of measurement, i.e., the coating thickness and flaws in a base, etc., can surely be detected over a very wide one- or two-dimensional range through a small number of measuring operations.

US 2011/245677 A1 describes an ultrasound diagnostic apparatus which comprises: an ultrasound probe having a plurality of ultrasound transducers; an apparatus body which supplies analog drive signals to the ultrasound transducers and generates ultrasound images based on reception signals output from the ultrasound transducers; and a connection cable which connects the ultrasound probe and the apparatus body, the ultrasound probe comprising: a plurality of receiving circuits, each including a preamp which amplifies the reception signal output from one of the ultrasound transducers and an A/D converter which converts the amplified reception signal.

There is a demand to continuously monitor the health of various plants, e.g., refineries, pipelines, paper mills, power plants and other heavy industry plants, that have assets, such as pipes, vessels, valves, and boilers, that have wall thicknesses that may change or degrade over time. The integrity of the asset may be inspected either during operation (i.e., on-line or "on-stream") or during turnarounds in which the whole plant or certain assets are shut down.

A selection of nondestructive testing techniques is covered by the governing industry standards such as API 510 or API 570. In general, one can distinguish between surface inspection techniques as visual testing, magnetic particle testing and liquid penetrant testing, and volumetric inspection techniques such as radiographic testing and ultrasonic testing. Ultrasonic wall thickness testing complemented by radiographic testing is the most common inspection technique used in the field. The ultrasonic inspection in conventional routine plant inspection uses single element, high-temperature ultrasonic transducers, which each include one piezoelectric element, to inspect assets for wall thinning or to inspect assets of a simple shape.

Ultrasonic inspection is typically accomplished by sending and receiving electrical pulses from a base apparatus having a signal producing device to a transducer mounted to the asset which converts the electrical pulses to ultrasonic waves that may propagate through the asset for non-destructive inspection. The ultrasonic waves may be reflected from the surfaces of the asset back to the transducer that may reconvert the waves to electrical pulses and direct them back to the base apparatus for further analysis. The base apparatus and transducer may be connected by a cable having conductors for transmitting the electrical pulses. If the asset whose thickness is to be measured is a pipe provided in a plant, the section of the asset and base apparatus with the signal processing device are often relatively distant from each other, e.g., distances up to one-hundred feet. Accordingly, a significant length of cable may be required to connect the base apparatus and the transducer mounted to the asset.

A current common practice is to utilize a dedicated wiring between each of individual transducers located at various positions around an asset or assets and the base apparatus. Two-conductor coaxial cable is a most common cable used for ultrasonic transducers wiring to the base station. The two-conductor cable may conduct various signals and pulses to perform measurement of the assets. However, it can be appreciated that the installation of cabling can be a significant cost in performing ultrasonic wall measurements.

In addition, the assets, especially in the case of a pipe, may have a substantial dimension and require that ultrasonic measurements be made at multiple locations to determine the thickness of, for example, a pipe over its length. Accordingly, there may be substantial time and effort required to repeatedly reposition the ultrasonic transducer at such remote locations to obtain a thorough inspection of the asset. Certain individuals would appreciate an ultrasonic measurement system that, without additional wiring and base apparatuses, permits the use of a plurality of ultrasonic sensors.

The foregoing background discussion is intended solely to aid the reader. It is not intended to limit the innovations described herein, nor to limit or expand the prior art discussed. Thus, the foregoing discussion should not be taken to indicate that any particular element of a prior system is unsuitable for use with the innovations described herein, nor is it intended to indicate that any element is essential in implementing the innovations described herein. The implementations and application of the innovations described herein are defined by the appended claims.

SUMMARY

In an aspect of the disclosure, there is provided a system for the ultrasonic measurement of an asset such as the wall of a pipe or a tank. The system can include a base apparatus and one or more ultrasonic sensing elements located remotely from the base apparatus. A multiplexer switch module including one or more individual switches may function as the interface between the base apparatus and the sensing elements. A primary two-conductor connector having first and second conductors may be used to connect the base apparatus to the multiplexer switch module. A second connection may be used to connect the multiplexer switch module to each respective sensing element. The base apparatus can transmit signals and pulses to the multiplexer switch module through the primary two-conductor connector, and the multiplexer switch element is configured to allow pulses to communicate with one or more of the sensing elements through the respective second connections when a respective one of the individual switches is closed.

BRIEF DESCRIPTION OF THE DRAWINGS

Various objects, features and attendant advantages will become more fully appreciated as the same becomes better understood when considered in conjunction with the accompanying drawings in which like reference characters designate the same or similar parts throughout the several views, and in which:

FIG. 1 illustrates features of an embodiment of the system for measuring the thickness of an asset at a plurality of locations as described herein;
FIG. 2 illustrates an exemplary ultrasonic sensing element and an asset to be measured;
FIG. 3 illustrates a flowchart of a process for determining the thickness of an asset in accordance with the principles disclosed herein;
FIG. 4 illustrates a simulated graph depicting voltage as a function of time of the measurement system disclosed herein;
FIG. 5 illustrates a diagrammatic view of an embodiment of a multiplexer switch module in accordance with the principles disclosed herein;
FIG. 6 illustrates a diagrammatic view of a second embodiment of a multiplexer switch module in accordance with the principles disclosed herein;
FIG. 7 illustrates another diagrammatic view of a third embodiment of a multiplexer switch module in accordance with the principles disclosed herein;
FIG. 8 illustrates an alternative embodiment of the multiplexer switch module of FIG. 1 further configured to measure temperature using a plurality of temperature measuring instruments at/proximate the asset being inspected; and
FIG. 9 illustrates an alternative embodiment of the multiplexer switch module of FIG. 1 further configured to measure temperature at a plurality of locations using a single temperature measuring instrument.

DETAILED DESCRIPTION

The following description is intended to convey the operation of exemplary embodiments of the innovation to those skilled in the art. It will be appreciated that this description is intended to aid the reader, not to limit the innovation. As such, references to a feature or aspect are intended to describe a feature or aspect of an embodiment of the innovation, not to imply that every embodiment of the innovation must have the described characteristic. Furthermore, it should be noted that the depicted detailed description illustrates a number of features. While certain features have been combined together to illustrate potential system designs, those features may also be used in other combinations not expressly disclosed for purposes of brevity to form additional combinations that were not otherwise shown for purposes of brevity, since the full scope of the present invention is only limited by the appended claims.

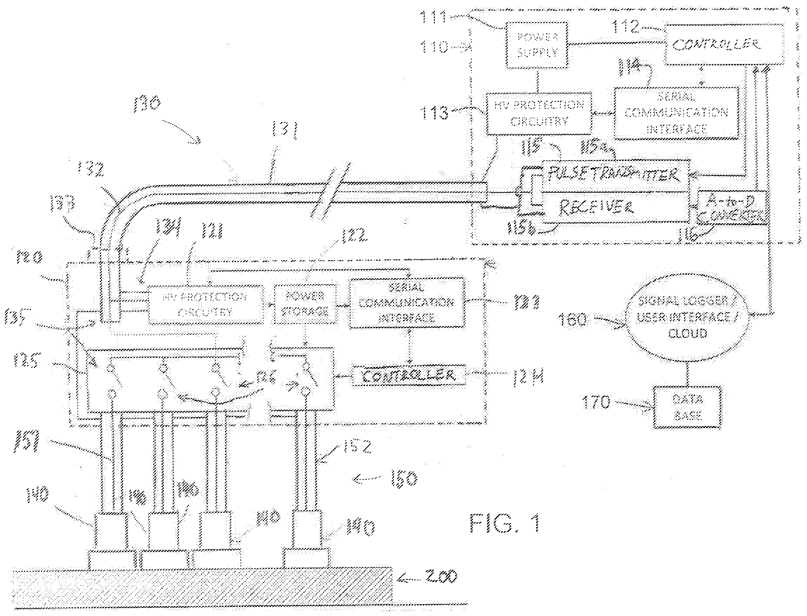

FIG. 1 illustrates features of an embodiment of a system 100 that is operative to permit the measurement of wall thickness at a plurality of locations of one or more assets 200 while minimizing the number of components and cables. The system 100 includes an ultrasonic wall thickness measurement system 110, a multiplexer switch module 120, a primary two-conductor connection 130, one or more ultrasonic sensing elements which, in some embodiments, may be ultrasonic transducers 140, one or more secondary connections 150, a cloud-based user interface 160, and a database 170.

The ultrasonic wall thickness measurement system 110 may be configured as a base unit including a power supply 111, a controller 112, high-voltage (HV) protection circuitry 113, a serial communications interface 114, a pulse transmitter 115a and a pulse receiver 115b, that may be combined together as a combined transmitter/receiver 115, and an analog-to-digital converter 116 which communicate with each other as illustrated in FIG. 1. Power supply 111 is configured to provide power to the ultrasonic wall thickness measurement system 110 including the controller 112 and also supply power to the multiplexer switch module 120 as described in further detail below. The controller 112 may also be configured to communicate with the cloud-based user interface 160, which, in turn, is configured to communicate with the database 170.

The high-voltage protection circuitry 113 is configured to protect the serial communication interface 114 from power supplied by power supply 111 and from pulses generated by the pulse transmitter 115a. The high-voltage protection circuitry 113 may be configured as a low-pass filter in which the lower frequency and lower power signals from the power supply 111 are permitted to pass while the higher frequency and higher voltage pulses generated by the pulse transmitter 115a and transmitted along the primary two-conductor connection 130 are blocked or filtered.

The controller 112 may be any type of electronic controller or electronic control module such as a microprocessor or microcontroller configured to control the operation of various aspects of the system 110. The controller 112 operates in a logical fashion to perform operations, execute control algorithms, store and retrieve data and other desired operations. The controller 112 may include or access memory, secondary storage devices, processors, communication interfaces and/or devices and any other components for running an application. The memory and secondary storage devices may be in the form of read-only memory (ROM), random access memory (RAM), electrically erasable memory (EPROM or FLASH) or integrated circuitry that is accessible by the controller 112. Various other circuits may be associated with the controller 112 such as power supply circuitry, signal conditioning circuitry, driver circuitry, and other types of circuitry.

The controller 112 may be a single controller or may include more than one controller configured to control various functions and/or features of the system 100. The term "controller" is meant to be used in its broadest sense to include one or more controllers and/or microprocessors that may be associated with the system 100 and that may cooperate in controlling various functions and operations of the system 100. The functionality of the controller 112 may be implemented in hardware and/or software without regard to the functionality. The controller 112 may rely on one or more data maps relating to the operating conditions and the operating environment of the system 100 that may be stored in the memory of the controller 112. Each of these data maps may include a collection of data in the form of tables, graphs, and/or equations. The controller 112 may be located as part of the wall thickness measurement system 110 and, in some instances, may also include components located remotely from the thickness measurement system 110.

While the specific serial communications interface 114 used can vary, the most common serial communications interface 114 is an asynchronous serial port with shorted transmit and receive pins on the controller 112, but most one-wire serial interfaces will also work. In another embodiment, a communications interface may be based on or similar to a two-wire bi-directional RS-485 hardware interface.

The pulse transmitter 115a is configured to generate an electrical pulse based upon an instruction or command from the controller 112 and transmit the pulse along the primary two-conductor connection 130. In embodiments, a pulse generated by the pulse transmitter 115a is sufficient to cause the ultrasonic transducer 140 to generate a desired ultrasonic wave. In an embodiment, the pulse may have a duration of 100 nanoseconds and have a voltage of 60 V. Other pulse lengths and voltages are contemplated. For example, the pulse length is often a function of the natural frequency of the ultrasonic transducer 140. Further, the voltage of the pulse may often range between 10-300 V, and more particularly may be in the range between 30-90 V, but in some embodiments may range to several hundred volts, with the voltage being a function of the thickness of the section of the asset 200 to be measured. The duration of the pulse may be approximately 50 nanoseconds to 10 microseconds.

The pulse receiver 115b is configured to receive analog electrical signals in the form of pulses that are reflected back along the primary two-conductor connection 130 as described in more detail below. In some embodiments, the pulse receiver 115b may be separate from the pulse transmitter 115a and may be located remotely from the ultrasonic wall thickness measurement unit 110 or may be part of a different measurement device. In the illustrated embodiment, the electrical signals are then converted by the analog-to-digital converter 116 to digital signals that are sent to the controller 112 for processing and/or analysis. The controller 112 may direct information from the analysis or processing of the signal to an external database 170 through the cloud-based user interface 160 for further analysis or storage.

The multiplexer switch module 120 functions as the interface between the ultrasonic wall thickness measurement system 110 and the one or more transducers 140. The multiplexer switch module 120 includes high-voltage protection circuitry 121, a power storage unit 122, a serial communications interface 123, a controller 124, and a switch unit 125 where each communicate with each other as illustrated in FIG. 1. The high-voltage protection circuitry 121 is configured to protect the components of the multiplexer switch module 120 from the (relatively) high-voltage and high frequency electrical signals that are transmitted along the primary two-conductor connection 130. The high-voltage protection circuitry 121 may be configured as a low-pass filter in which the lower frequency signals from the power supply 111 and serial communication interface 114 associated with the ultrasonic wall thickness measurement system 110 are permitted to pass while the higher frequency (and usually higher voltage) pulses generated by the pulse transmitter 115a and transmitted along the primary two-conductor connection 130 are blocked, limited, or filtered.

The power storage unit 122 may be configured to be charged and discharged during operation in order to provide power to the serial communication interface 123, the controller 124, and the switch unit 125. In an embodiment, the power storage unit 122 may comprise a capacitor. In other embodiments, the power storage unit 122 may comprise a battery, an inductor, or another structure operative to store the power necessary to operate the multiplexer switch module 120.

In embodiments, the serial communication interface 123 may be configured in a manner similar or identical to the serial communication interface 114 described above. In embodiments, the controller 124 may be configured in a manner similar or identical to the controller 112 described above. In other embodiments, the controller 124 may have less functionality than the controller 112 described above. The controller 124 may be configured to receive digital signals from the controller 112 and instruct or command the operation of the multiplexer switch module 120 to open and close individual switches 126 of the switch unit 125. Still further, the controller 124 may be configured to store information, such as either within an on-board, non-volatile memory (e.g., EPROM or FLASH) or other memory, with respect to the multiplexer switch module 120. Such information may include, for example, identification information (e.g., serial number) as well as the maximum and/or minimum power ratings which the multiplexer switch module 120 has been rated or recorded during operation.

The switch unit 125 includes at least one individual switch 126 and may include a plurality of individual switches 126 disposed electrically between the primary two-conductor connection 130 and respective ones of the additional secondary connections 150. Any suitable number of individual switches 126 can be included with the switch unit 125. The individual switches 126 can be implemented in any suitable manner and may be configured as a single pole single throw switch. In one example, the individual switches 126 may be configured as solid-state relays controlled to turn on and off as a result of a current or voltage applied to its control input. Operation of the individual switches 126 can be controlled by the controller 124. Each individual switch 126 may be electrically connected to one of the ultrasonic transducers 140 by a secondary connection 150.

Each ultrasonic sensing element, which in some embodiments may be an ultrasonic transducer 140, is configured to be mounted on a section of an asset 200 whose thickness is to be measured and a number of ultrasonic transducers 140 may be mounted over the length of the asset 200 in a spaced-apart arrangement. The asset 200 may be, for example, a pipe, vessel, valves, and/or boilers. The ultrasonic transducer 140 may be configured with a piezoelectric element that generates ultrasonic waves upon being excited by the high-voltage pulse from the pulse transmitter 115a and converts ultrasonic waves back into electrical waves or signals for conduction back to the ultrasonic wall thickness measurement system 110.

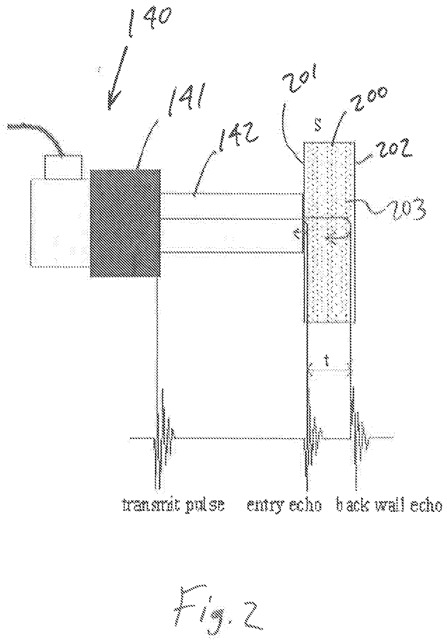

For example, referring to FIG. 2, an ultrasonic transducer 140 is depicted which includes a piezoelectric element 141 and a ceramic spacing element or spacer 142 mounted to a solid wall 203 of an asset 200 such as a pipe having a first, exterior, or near surface 201 in contact with the spacer 142 and a second, interior, or far surface 202. In other embodiments, the spacer 142 may be omitted.

In operation, a high-voltage pulse is generated by the pulse transmitter 115a and travels along the primary two-conductor connection 130 until reaching the ultrasonic transducer 140. An ultrasonic wave is generated by the transducer 140 and travels through the spacer 142 until reaching the first surface 201 of the wall 203. At the interface between the ceramic spacer 142 of the transducer 140 and the first surface 201 of the wall 203, a portion of the ultrasonic wave is reflected back by the first surface 201 and through the ceramic spacer 142 until reaching the piezoelectric element 141 at which time it is converted back into an electrical waveform. This electrical waveform travels back along a respective secondary connection 150 and the primary two-conductor connection 130 until reaching the pulse receiver 115b. This waveform may be referred to as an entry echo since it is generated based upon the ultrasonic wave entering or contacting the exterior or first surface 201 of the asset 200 to be measured.

A remaining portion of the ultrasonic wave passes through the wall 203 of the asset 200 until reaching the second surface 202 where a second ultrasonic wave is reflected back through the asset 200. This second reflected wave travels back through the ceramic spacer 142 until reaching the piezoelectric element 141 at which time it is converted into a second electrical waveform. The second electrical waveform travels back along the respective secondary connection 150 and the primary two-conductor connection 130 until reaching the pulse receiver 115b. This second waveform may be referred to as a back wall echo since it is generated based upon the ultrasonic wave contacting the interior or second surface 202 of the asset 200 to be measured.

The primary two-conductor connection 130 can extend between the ultrasonic wall thickness measurement system 110 and the multiplexer switch module 120. The primary two-conductor connection 130 can be configured to transmit or conduct signals and power in electrical form; however, other forms of transmission such as optical are contemplated by the disclosure. The primary two-conductor connection 130 may have a first conductor 131 and a second conductor 132 and thus may be configured as a cable with only two conductors. However, the primary two-conductor connection 130 may have any desired configuration. In the depicted embodiment, the primary two-conductor connection 130 is configured as a coaxial cable with a first outer conductor 131 surrounding a second inner conductor 132. In a coaxial cable, the outer conductor 131 often operates as a shield, a return or a ground signal for the inner conductor 132. In another embodiment, the two-conductor connection 130 may comprise a twisted-pair cable with each conductor of the twisted-pair providing only a single electrical path. Accordingly, as used herein, reference to the primary two-conductor connection 130 having "only two conductors" refers to a configuration having only two electrical paths, each having a different electrical potential.

In an embodiment, the ultrasonic wall measurement system 110 and the multiplexer switch module 120 may be remote from each other and the primary two-conductor connection 130 may extend a substantial distance between the location of the ultrasonic wall measurement system 110 and the location of the multiplexer switch module 120. For example, the primary two-conductor connection 130 may extend a distance of over one-hundred feet. In a possible embodiment, however, the ultrasonic wall measurement system 110 and the multiplexer switch module 120 may be located proximate to or adjacent to each other, and in such an embodiment, they may be part of the same assembly and located in the same enclosure.

After entering an entrance 133 to the multiplexer switch module 120, the primary two-conductor connection 130 electrically establishes two parallel circuit paths or branches. In particular, in a first branch 134, the first and second conductors 131, 132 of the primary two-conductor connection 130 may be electrically connected to the high-voltage protection circuitry 121 of the multiplexer switch module 120. The high-voltage protection circuitry 121 can filter, block, or limit the high frequency (and usually high voltage) pulse from passing further into the multiplexer switch module 120. The power storage unit 122, the serial connection interface 123, and the controller 124 connected in series with the high-voltage protection circuitry 121 are thus protected.

Also after entering the entrance 133, the primary two-conductor connection 130 may direct the first and/or second conductors 131, 132 into a second parallel branch 135 that may be directly connected to the individual switches 126 of the switch unit 125 so that the individual switches 126 can receive the high frequency (and usually high voltage) pulse without attenuation. The plurality of individual switches 126 may be electrically connected in parallel with the second branch 135 with at least one of the first and/or second conductors 131, 132 so that each individual switch 126 can receive the high frequency (and usually high voltage) pulse. In an embodiment, the second conductor 132 may be electrically connected in parallel to one contact of the individual switches 126 and the first connector 131 may be electrically connected to a conductive portion of the switch unit 125 to function as a return or ground. In another embodiment, the first conductor 131 may bypass the switch unit 125 and continue to the transducers 140. In another embodiment, the first conductor 131 of the primary two-conductor connection 130 may be configured as an earth ground.

The secondary connections 150 may be configured in a manner similar or identical to the primary two-conductor connection 130 having only two conductors and may in various embodiments be a coaxial cable or twisted-pair wiring. However, in some embodiments, the secondary connection 150 may include more than two conductors. Accordingly, unlike the primary connection 130, the secondary connection 150 is not limited to a two-conductor configuration. In the depicted embodiment, each secondary connection 150 has a first conductor 151 and a second conductor 152. An electrical connection can be established within the multiplexer switch module 120 between the second conductor 132 of the primary two-conductor connection 130 and the second conductors 152 of the secondary connection 150. The second conductor 132 of the primary two-conductor connection 130 is electrically connected to one end of the switch unit 125 and the second conductor 152 of each secondary connection 150 is electrically connected to a contact of the individual switches 126 of the switch unit 125. As a result, by closing individual ones of the individual switches 126, an electrical connection is made between the primary two-conductor connection 130 and the secondary connection 150 associated with the closed switch 126. An ultrasonic transducer 140 can be operatively connected to each secondary connection 150.

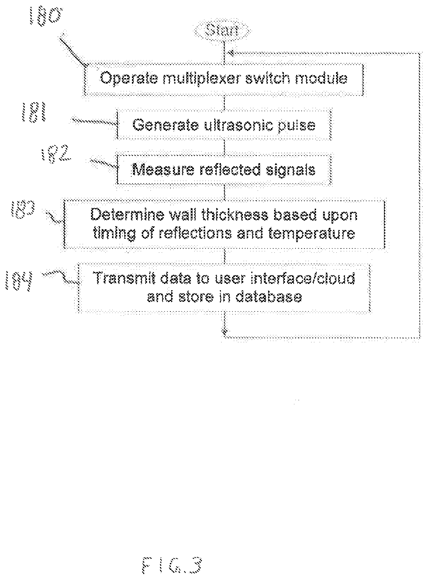

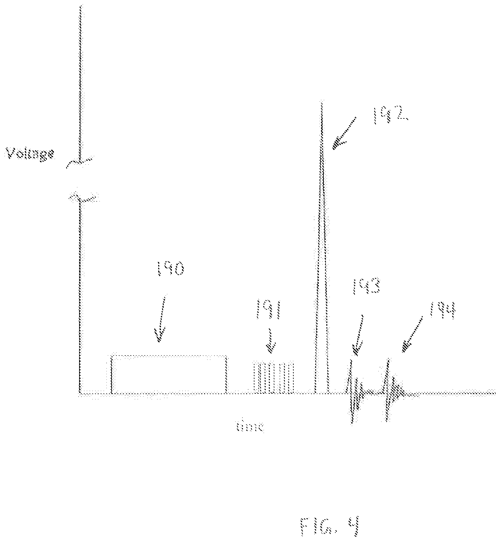

Referring to FIG. 3, a flowchart is depicted of a process for performing a measurement of the wall thickness of the section of the asset 200 at a plurality of locations using the system 100. At stage 180, the individual switch 126 in the multiplexer switch module 120 corresponding to the desired ultrasonic transducer 140 to be activated is selected and closed. More specifically, the controller 112 associated with the ultrasonic wall thickness measurement system 110 generates and transmits a power command to the power supply 111 to send the appropriate power in the form of a power signal 190 through the primary two-conductor connection 130 to the multiplexer switch module 120. In an embodiment, the power signal 190 may have a duration of between one millisecond to five seconds, and more specifically between 10-300 milliseconds, and a voltage range of 1.8-5.0 V. The power required to charge the power storage unit 122 may be similar to the power signal 190 and is illustrated in the chart of FIG. 4. The power signal 190 sent by the power supply 111 of the base unit is sufficient to charge the power storage unit 122 of the multiplexer switch module 120. Due to the low frequency and/or low voltage nature of the power signal 190, it passes through the high-voltage protection circuitry 121 of the multiplexer switch module 120 to the power storage unit 122.

After a predetermined period of time (i.e. sufficient to permit the power storage unit 122 to be sufficiently charged), the controller 112 of the ultrasonic wall thickness measurement system 110 may generate and transmit an instruction or switching command signal 191 through the serial communication interface 114 and the high-voltage protection circuitry 113 to the multiplexer switch module 120. The switching command signal 191 passes along the primary two-conductor connection 130, through the high-voltage protection circuitry 121 to the serial communication interface 123 to the controller 124. In an example, the switching command signal 191 may be sent at a rate of approximately 10 kHz so that it passes through the high-voltage protection circuitry 121 of the multiplexer switch module 120. Upon receiving the switching command signal 191, the controller 124 generates and transmits a signal to the switch unit 125 to close the desired individual switch 126. The controller 124 may be preprogrammed or include circuitry that can interpret the switching command signal 191 as identifying a specific one or more of the individual switches 126 in the switch unit 125 that are intended to be closed in order to activate the desired transducer 140. The power signal 190 used to charge the power storage unit 122 and the switching command signal 191 are each at a low enough frequency and voltage that they do not sufficiently excite the piezoelectric element 141 of the transducer 140.

Once the desired individual switch 126 is closed, the controller 112 of the ultrasonic wall thickness measurement system 110 generates and transmits an instruction or command at stage 181 to the pulse transmitter 115a to send a high-voltage pulse 192 to the ultrasonic transducer 140. In an embodiment, the high-voltage pulse 192 may have a duration of approximately 50 nanoseconds to 10 microseconds, and specifically 100 nanoseconds, and can have a voltage of between 10-300 V, and more specifically between 30-90 V. The high-voltage pulse 192 travels along the primary two-conductor connection 130, through the individual switch 126 of the switch unit 125 that is closed, and through the secondary connection 150 that is electrically connected to the closed switch 126 to reach the ultrasonic transducer 140 electrically connected to the secondary connection 150. The individual switches 126 of the switch unit 125 that remain open break the circuit and block the high-voltage pulse 192 from proceeding to the not selected associated transducers 140. The high-voltage protection circuitry 121 of the multiplexer switch module 120 filters, blocks, or limits the high-voltage pulse 192 from passing further into the module 120, thereby protecting the power storage unit 122, the serial communication interface 123, the controller 124 and other components that are connected downstream in series with the high-voltage protection circuitry 121.

The high-voltage pulse 192 causes the piezoelectric element 141 of the ultrasonic transducer 140 to generate an ultrasonic wave that passes through the spacer element 142 into the asset 200 as depicted in FIG. 2.

At stage 182, the reflected signals from the ultrasonic transducer 140 are measured as described above with respect to FIG. 2. In doing so, a portion of the ultrasonic wave is reflected back by the first surface 201 to create an entry echo wave that the piezoelectric element 141 of the transducer 140 converts into an analog electrical waveform depicted at 193 in FIG. 4. The analog waveform of the entry echo wave is transmitted along the secondary connection 150 electrically connected to the ultrasonic transducer 140, through the closed individual switch 126 of the switch unit 125. The signal 193 corresponding to the entry echo wave exits the multiplexer switch module 120 through the primary two-conductor connection 130, is received at the pulse receiver 115b and travels to an analog-to-digital converter 116 and then to the controller 112. It will be appreciated that the analog-to-digital converter 116 converts the analog wave form of the entry echo signal 193 to a digital signal interpretable to the controller 112.

A second portion of the ultrasonic wave generated by the piezoelectric element 141 of the transducer 140 travels through the asset 200 and is reflected back by the second surface 202 to create a back wall echo wave that is received by the piezoelectric element 141 and converted into an analog electrical waveform depicted at 194. The analog electrical waveform of the back wall echo wave 194 is transmitted along the secondary connection 150 electrically connected to the ultrasonic transducer 140, through the closed switch 126 of the switch unit 125, through the primary two-conductor connection 130, received at the pulse receiver 115b and travels to the analog-to-digital converter 116 where it is converted and then to the controller 112. The serial communications interface 114 as well as the power supply 111 and the controller 112 are protected from the high-voltage pulse generated by the pulse transmitter 115a by the high-voltage protection circuitry 113.

At stage 183, the controller 112 may determine the wall thickness of the asset 200 based upon the time between the entry echo wave and the back wall echo wave. The calculation may be performed in any desired manner. In one example, the controller 112 may determine the time between the peaks of the entry echo wave 193 and the back wall echo wave 194. By knowing the velocity of the ultrasonic wave traveling through the asset 200, the thickness may be measured according to a representative formula:

$$S = V*(t/2)$$

Where V is the velocity of sound in the asset 200, as compensated for any irregularities, and t is the time between the entry echo wave and the exit echo wave. Other manners of determining temperature compensated wall thickness are contemplated. For example, a temperature compensated wall thickness may be determined based upon thickness readings made at two or more different temperatures.

At stage 184, the controller 112 may transmit the wall thickness data together with other data such as date and time, and other desired information to a user interface and/or the cloud 160. In addition, such data may be stored within a database 170.

Depending upon the configuration of the power storage unit 122 and the controller 124 of the multiplexer switch module 120, as well as the duration of the command used to charge the power storage unit 122, it may be necessary or desirable to repeat the charging process each time it is desired to control or operate an individual switch 126 of the switch unit 125. In such case, a command may be generated to charge the power storage unit 122, operate one of the individual switches 126, and then generate the desired pulse to operate the transducer 140 that is electrically connected to the closed switch 126.

In other embodiments, the power storage unit 122, the controller 124 and the power signal used to charge the power storage unit 122 may be sufficient to permit the control of a plurality of individual switches 126. In such case, a command may be generated as necessary to charge the power storage unit 122, and then sequentially operate a desired number of individual switches 126 and generate a pulse as each switch 126 is closed to operate the electrically connected transducer 140. If the power storage unit 122 is configured to store a sufficient amount of power, this process may be repeated without the need for additional charging cycles during the process of closing individual switches 126 and generating pulses to operate the electrically connected transducers 140. Multiple switching command signals 191 may be transmitted following a single power signal 190, and the module controller 124 may interpret the switching command signal 191 to open or close selective individual switches 126. However, if the power storage unit 122 cannot store a sufficient amount of power, it may be necessary to generate more power signals 190 to charge the power storage unit 122 after a desired number of switching and measuring cycles.

The two-conductor solution described and illustrated herein for a wall thickness measurement instrument allows for multi-spot wall thickness measurements, which results in a lower cost as compared to a conventional design. The system 100 allows for the routing of the following using the same two-conductor connection 130: (1) electric pulses to stimulate the ultrasonic transducer 140 and reflected pulses that are converted into electrical signal; (2) the power required to energize and operate the multiplexer switch module 120; and (3) the multiplexer switch module 120 to control signals realized by a serial communication protocol. Utilizing the same two-conductor connection 130 to fulfill each of the foregoing functions is an improvement in the art as prior art systems needed to implement each of the foregoing functions would be accomplished using a separate set of wires for each function.

Accordingly, the disclosure provides a configuration for a system 100 in which waveforms and other signals carrying information from at least two sensors, e.g., transducers 140 is sent over a primary two-conductor connection 130 having only two conductors to make multiple measurements at a plurality of locations on an asset 200. In a more particular embodiment, the disclosed system 100 permits the use of at least two analog sensors such as the ultrasonic transducer 140 to conduct analog inspection of an asset 200 using the same ultrasonic wall thickness measurement system 110 or base unit. Other analog sensors including vibration sensors could also be used. Further, other digital sensors including temperature sensors, pressure sensors, humidity sensors, and light sensors could also be used.

Still further, although each of the high-voltage protection circuitries 113, 121 are described as low-pass filters since the high-voltage pulse has a relatively high frequency, other configurations are contemplated. For example, since the electrical pulse generated by the pulse transmitter 115a has a relatively high voltage, the high-voltage protection circuitries 113, 121 may be configured to limit the amplitude of any passing signals. In an embodiment, the high-voltage protection circuitries 113, 121 may be configured with a Zener diode to limit the voltage of signals that may pass.

From the foregoing, it may be understood that the two-wire or two-conductor solution described and illustrated herein permits the installation and use of a wall thickness analysis system at multiple locations on an asset 200 or on multiple assets 200 with substantially the same wiring cost as a system that measures wall thickness at only a single location. In general, in industrial settings, e.g., refineries, pipelines, heavy industry plants, the wiring cost of a new instrument installation can be a substantial percentage of the total installation cost. Reducing the number of required wires or reusing existing wiring provides significant cost savings.

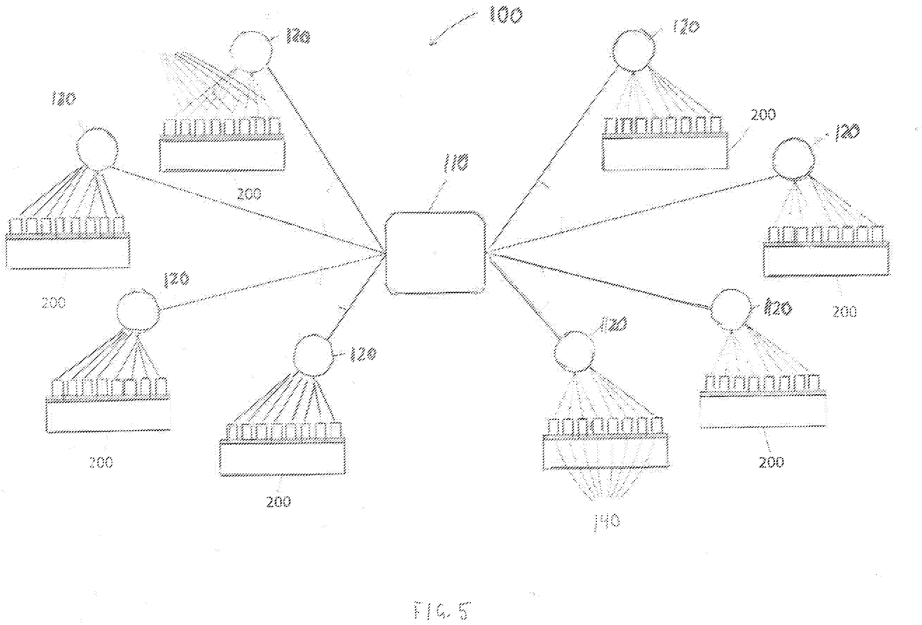

Referring to FIG. 5, there is illustrated an embodiment of the system 100 configured to make ultrasonic measurements at a plurality of locations on a plurality of assets 200. In the illustrated example, the ultrasonic wall thickness measurement system 110 or base unit may have eight (8) coaxial primary cables or primary two-conductor connections 130 extending outwardly therefrom. Each primary two-conductor connection 130 extends to a respective multiplexer switch module 120. Each multiplexer switch module 120 has eight (8) coaxial secondary cables or secondary connections 150 extending from it and terminating in a respective transducer 140 mounted to one or more assets 200. The illustrated embodiment thereby allows for more measurements of a single asset 200 or of multiple assets 200, with only a single ultrasonic wall thickness measurement system 110.

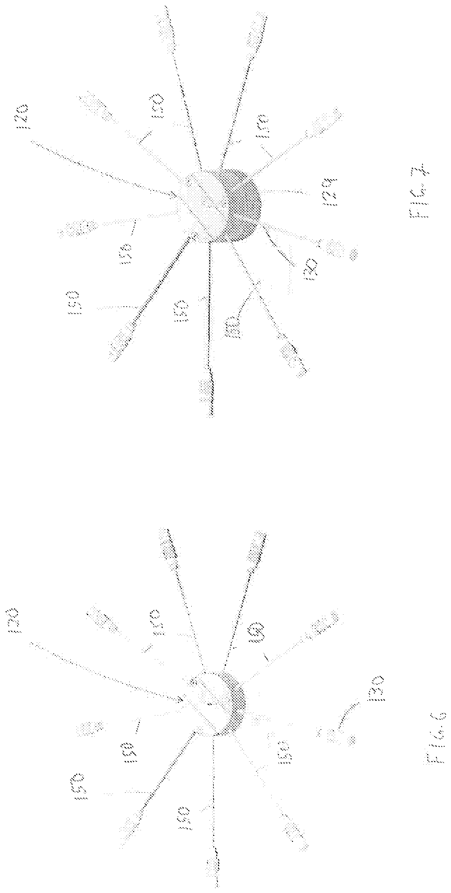

Referring to FIG. 6, the multiplexer switch module 120 is illustrated having a single primary two-conductor connection 130 connected to base unit 110 and a plurality of secondary connections 150 extending from it. The multiplexer switch module 120 can be configured to have a magnet (not shown) integrated therein so as to allow the multiplexer switch module 120 to be mounted/secured to a component (whether asset 200 or otherwise). As illustrated in FIG. 7, the multiplexer switch module 120 can alternatively be configured to have an external magnet 129 secured thereto so as to allow the multiplexer switch module 120 to be mounted/secured to a component (whether asset 200 or otherwise).

In a further aspect, in order to more accurately calculate the thickness of an asset 200 such as a wall of a pipe, it may be desirable to determine the temperature of the asset 200 at the time the ultrasonic measurements are made. Because the asset 200 may be located in an industrial setting such as a plant or a factory, the asset 200 may be at an elevated temperature when the ultrasonic readings are taken. It is known that the speed of ultrasonic waves traveling through metallic and other materials commonly used in or retained in the asset 200 is temperature dependent. Thus, in order to accurately measure the thickness of a desired section of an asset 200, compensation or correction for the change in speed of the ultrasonic waves with temperature is desired.

Accordingly, in an embodiment, the ultrasonic wall thickness measurement unit 110 may be configured to determine the velocity of sound as a function of temperature based upon data from a lookup table within or associated with the controller 112. Other manners of determining temperature compensated wall thickness are contemplated. For example, a temperature compensated wall thickness may be determined based upon thickness readings made at two or more different temperatures. The temperature adjacent to the transducer 140 may be determined in any desired manner.

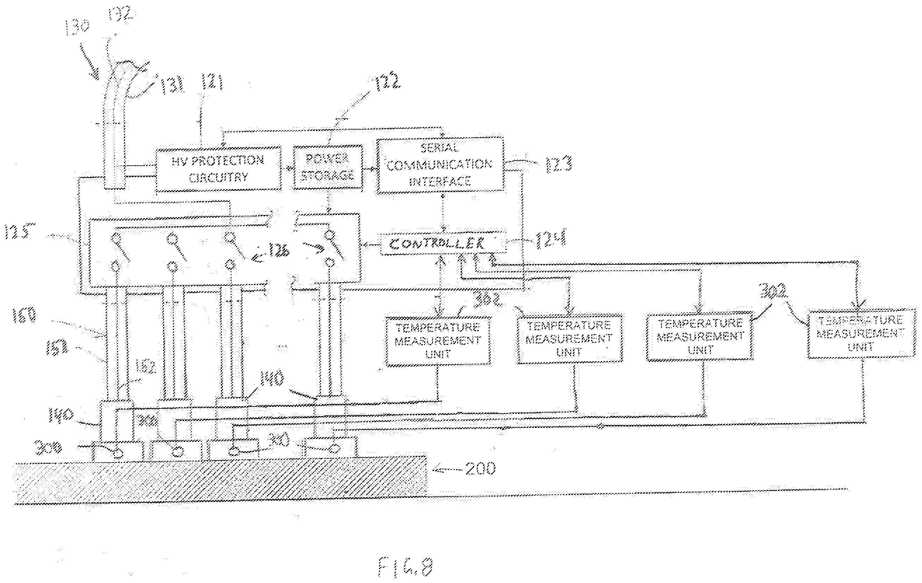

Referring to FIG. 8, there is depicted an embodiment of the system 100 in which a temperature sensing element 300 may be associated with each transducer 140. The temperature sensing element 300 may be a thermocouple, a resistance temperature detector ("RTD") or other sensing component or system for measuring the temperature of the asset 200 under inspection. In an embodiment, the temperature sensing element 300 is mounted on, or adjacent to, each transducer 140. The reading from the temperature sensing element 300 may be transmitted through either the first or second conductors 151, 152 of the secondary connection 150. In another embodiment, as depicted in FIG. 8, a temperature measurement instrument 302 may be electrically connected to each temperature sensing element 300 and controlled by the controller 124 associated with the multiplexer switch module 120. In such case, either shortly before or after one of the individual switches 126 are closed and the electrically connected transducer 140 excited, the controller 124 may generate and transmit an appropriate signal to the temperature measurement instrument 302 to read the temperature of a sensing element 300 associated with the transducer 140 that will be or was operated. The temperature or raw temperature data may be transmitted by the controller 124 to the controller 112 of the ultrasonic wall thickness measurement system 110 where it may be recorded and utilized in the analysis of the ultrasonic feedback to determine wall thickness. This process may be repeated for each transducer 140 and temperature sensing element 300.

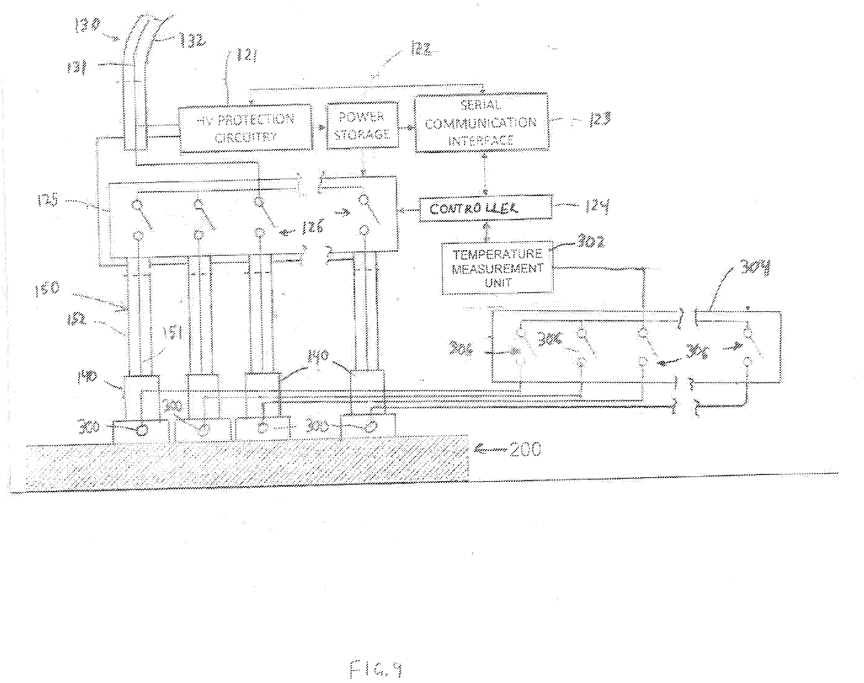

In an alternate embodiment depicted in FIG. 9, a single temperature measurement instrument 302 may be controlled by the controller 124 of the multiplexer switch module 120 and an additional switch unit 304 can be disposed electrically between the temperature measurement instrument 302 and the temperature sensing elements 300. In the additional switch unit 304, a plurality of individual switches 306 are electrically associated with respective ones of the plurality of temperature sensing elements 300. The controller 124 is also configured to control the individual switches 306 of the switch unit 304. In such case, the controller 124 may close the desired individual switch 306 and generate a signal so the temperature measurement instrument 302 reads the resistance of the temperature sensing element 300 electrically connected through the closed switch 306.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

Accordingly, this disclosure includes all modifications of the subject matter recited in the claims appended hereto as permitted by applicable law.

**Claims**

1. A system (100) for monitoring a thickness of one or more assets (200), the system (100) comprising:

an ultrasonic measurement system (110);
multiple ultrasonic sensing elements (140), each ultrasonic sensing element (140) being remote from the ultrasonic measurement system (110), the ultrasonic sensing elements (140) being configured to be operatively associated with the one or more assets (200);
a multiplexer switch module (120) including multiple individual switches (126);
a single primary two-conductor connection (130), the primary two-conductor connection (130) having only a first and a second conductor (131, 132) and thus being configured as a cable with only two conductors, the primary two-conductor connection (130) connecting the ultrasonic measurement system (110) and the multiplexer switch module (120); and
one or more secondary connections (150), each secondary connection (150) including first and second conductors (151, 152), each secondary connection (150) being connected to a respective one of the individual switches (126) of the multiplexer switch module (120) and to a respective one of the ultrasonic sensing elements (140);
wherein the ultrasonic measurement system (110) is configured to send signals and pulses to the multiplexer switch module (120) along the primary two-conductor connection (130), the multiplexer switch module (120) is configured to receive the signals and control the individual switches (126) between open and closed positions, the multiplexer switch module (120) is further configured to allow the pulses sent by the ultrasonic measurement system (110) to communicate with the ultrasonic sensing elements (140) when a respective one of the individual switches (126) is in a closed state.

2. The system (100) of claim 1, wherein the multiplexer switch module (120) includes a controller (124) configured to selectively control an individual switch (126) of the multiple individual switches (126), and the multiplexer switch module (120) includes a power storage unit (122) electrically connected to the primary two-conductor connector (130).

3. The system (100) of claim 2, wherein the power storage unit (122) is electrically connected to the controller (124) and the individual switches (126), and the first conductor (131) of the primary two-conductor connection (130) is electrically connected to the individual switches (126) in parallel.

4. The system (100) of claim 3, wherein the first conductor (131) or the second conductor (132) of the primary two-conductor connection (130) is implemented using an earth ground connection; and the first conductor (151) or the second conductor (152) of the secondary connection (150) is implemented using an earth ground.

5. The system (100) of claim 3, wherein the multiplexer switch module (120) includes high-voltage protection circuitry (121) disposed between the controller (124) and the primary two-conductor connection (130), preferably the high-voltage protection circuitry (121) comprises a low-pass filter.

6. The system (100) of claim 3, wherein the ultrasonic measurement system (110) comprises:

a power supply (111);
a pulse transmitter (115a); and
a controller (112) operatively connected to the power supply (111) and the pulse transmitter (115a).

7. The system (100) of claim 6, wherein the controller (112) of the ultrasonic measurement system (110) is configured to:

direct the power supply (111) to transmit a power signal along the primary two-conductor connection (130) to the power storage unit (122) of the multiplexer switch module (120);
transmit a switching command signal along the primary two-conductor connection (130) to the multiplexer switch module (120), which switching command signal (191) causes one of the individual switches (126) to connect the primary two-conductor connection (130) to a respective one of the secondary connections (150) and a respective one of the ultrasonic sensing element (140); and
direct the pulse transmitter (115a) to transmit an electrical pulse to the respective one of the ultrasonic sensing elements (140) via the primary two-conductor connection (130), the respective one of the individual switches (126) and the respective one of the secondary connections (150).

8. The system (100) of claim 7, wherein the power signal and the switching command signal have a duration of between approximately 1 millisecond to 5 seconds and a voltage range of 1.8-5.0 V and the electrical pulse has a duration of approximately 50 nanoseconds to 10 microseconds and a voltage range of 10-300 V, wherein preferably er4 the power signal and the switching command signal have a duration of between approximately 10 milliseconds to 300 milliseconds and a voltage of approximately 3.3 V and the electrical pulse has a duration of approximately 100 nanoseconds and a voltage range of approximately 30-90 V.

9. The system (100) of claim 8, further comprising a pulse receiver (1 115b) which is configured to receive one or more reflective waves in response to the electrical pulse generated by the plus transmitter (115 a), preferably the ultrasonic measurement system (110) includes the pulse receiver (115b) and preferably the pulse transmitter (115a) and the pulse receiver (115b) are combined.

10. The system (100) of claim 1, wherein the primary two-conductor connection (130) and the secondary connections (150) are cables having two conductive paths, preferably the cables are coaxial cables.

11. The system (100) of claim 1, wherein the multiplexer switch module (120) is located remotely from the ultrasonic measurement system (110), preferably further comprising a plurality of primary two- conductor connections (130) and a plurality of multiplexer switch modules (120) including a plurality of individual switches (126), each multiplexer switch module (120) being connected to the ultrasonic measurement system (110) by a respective one of the primary two-conductor connections (130).

12. The system (100) of claim 1, wherein the multiplexer switch module (120) is located proximate to the ultrasonic measurement system (110); or each ultrasonic sensing element (140) is an ultrasonic transducer, preferably the ultrasonic transducer includes a piezoelectric element.

13. The system (100) of claim 1, further comprising one or more temperature sensing elements (300), each temperature sensing element (300) being operatively associated with a respective one of the ultrasonic sensing elements (140) for measuring a temperature of the asset (200) at or near a location of the respective one of the ultrasonic sensing elements (140).

14. A method of monitoring a thickness of an asset (200) performed by a system of any one of the preceding claims, the method comprising the steps of:

sending the power signal along the primary two-conductor connection (130) from the ultrasonic measurement system (110) to the power storage unit (122) of the multiplexer switch module (120) to power the multiplexer switch module (120);

sending the switching command signal along the primary two-conductor connection (130) from the ultrasonic measurement system (110) to the controller (124) of the multiplexer switch module (120) to close the individual switch (126) of the multiplexer switch module (120), whereby the individual switch (126) electrically connects the primary two-conductor connection (130) to the secondary connection (150) that terminates at the ultrasonic sensing element (140) that is operatively associated with the asset (200); and

transmitting the electrical pulse along the primary two-conductor connection (130) from the ultrasonic measurement system (110) to the individual switch (126), along the secondary connection (150), and to the ultrasonic sensing element (140) to cause the ultrasonic sensing element (140) to generate the ultrasonic wave.

15. The method of claim 14, further comprising the step of blocking the electrical pulse from the controller (124) and power storage unit (122) of the multiplexer switch module (120) with high-voltage protection circuitry (121); and

further comprising the step of measuring a temperature of the asset (200) with a temperature sensing element (300) that is operatively associated with the ultrasonic sensing element (140); and
further comprising the step of receiving one or more reflective waves with a pulse receiver (115b), which reflective waves are generated in response to the electrical pulse generated by the plus transmitter (115a).

**Patentansprüche**

1. System (100) zum Überwachen einer Dicke eines oder mehrerer Anlagen (200), wobei das System (100) umfasst:

ein Ultraschallmesssystem (110);
mehrere Ultraschallsensorelemente (140), wobei jedes Ultraschallsensorelement (140) vom Ultraschallmesssystem (110) entfernt ist, wobei die Ultraschallsensorelemente (140) so konfiguriert sind, dass sie operativ dem einen oder den mehreren Anlagen (200) zugeordnet werden können;

ein Multiplexer-Schaltermodul (120), das mehrere einzelne Schalter (126) beinhaltet;

eine einzige primäre Zweileiterverbindung (130), wobei die primäre Zweileiterverbindung (130) nur einen ersten und einen zweiten Leiter (131, 132) aufweist und daher als ein Kabel mit nur zwei Leitern konfiguriert ist, wobei die primäre Zweileiterverbindung (130) das Ultraschallmesssystem (110) und das Multiplexer-Schaltermodul (120) verbindet; und

eine oder mehrere sekundäre Verbindungen (150), wobei jede sekundäre Verbindung (150) einen ersten und einen zweiten Leiter (151, 152) beinhaltet, wobei jede sekundäre Verbindung (150) mit einem jeweiligen der einzelnen Schalter (126) des Multiplexer-Schaltermoduls (120) und mit einem jeweiligen der Ultraschallsensorelemente (140) verbunden ist;

wobei das Ultraschallmesssystem (110) so konfiguriert ist, dass es Signale und Impulse entlang der primären Zweileiterverbindung (130) an das Multiplexer-Schaltermodul (120) sendet, das Multiplexer-Schaltermodul (120) so konfiguriert ist, dass es die Signale empfängt und die einzelnen Schalter (126) zwischen offenen und geschlossenen Positionen steuert, das Multiplexer-Schaltermodul (120) weiter so konfiguriert ist, dass es ermöglicht, dass die vom Ultraschallmesssystem (110) gesendeten Impulse mit den Ultraschallsensorelementen (140) kommunizieren, wenn sich ein jeweiliger der einzelnen Schalter (126) in einem geschlossenen Zustand befindet.

2. System (100) nach Anspruch 1, wobei das Multiplexer-Schaltermodul (120) eine Steuereinheit (124) beinhaltet, die so konfiguriert ist, dass sie selektiv einen einzelnen Schalter (126) der mehreren einzelnen Schalter (126) steuert, und das Multiplexer-Schaltermodul (120) eine Stromspeichereinheit (122) beinhaltet, die elektrisch mit dem primären Zweileiterverbinder (130) verbunden ist.

3. System (100) nach Anspruch 2, wobei die Stromspeichereinheit (122) elektrisch mit der Steuereinheit (124) und den einzelnen Schaltern (126) verbunden ist und der erste Leiter (131) der primären Zweileiterverbindung (130) elektrisch mit den einzelnen Schaltern (126) parallel verbunden ist.

4. System (100) nach Anspruch 3, wobei der erste Leiter (131) oder der zweite Leiter (132) der primären Zweileiterverbindung (130) unter Verwendung einer Erdungsverbindung implementiert ist; und der erste Leiter (151) oder der zweite Leiter (152) der sekundären Verbindung (150) unter Verwendung einer Erdung implementiert ist.

5. System (100) nach Anspruch 3, wobei das Multiplexer-Schaltermodul (120) Hochspannungsschutzschaltung (121) beinhaltet, die zwischen der Steuereinheit (124) und der primären Zweileiterverbindung (130) angeordnet sind, bevorzugt die Hochspannungsschutzschaltung (121) einen Tiefpassfilter umfasst.

6. System (100) nach Anspruch 3, wobei das Ultraschallmesssystem (110) umfasst:

eine Stromversorgung (111);
einen Impulsgeber (115a); und
eine Steuereinheit (112), die operativ mit der Stromversorgung (111) und dem Impulsgeber (115a) verbunden ist.

7. System (100) nach Anspruch 6, wobei die Steuereinheit (112) des Ultraschallmesssystems (110) so konfiguriert ist, dass sie:

die Stromversorgung (111) anweist, ein Stromsignal entlang der primären Zweileiterverbindung (130) an die Stromspeichereinheit (122) des Multiplexer-Schaltermoduls (120) zu übertragen;

ein Schaltbefehlssignal entlang der primären Zweileiterverbindung (130) an das Multiplexer-Schaltermodul (120) überträgt, wobei das Schaltbefehlssignal (191) einen der einzelnen Schalter (126) veranlasst, die primäre Zweileiterverbindung (130) mit einer jeweiligen der sekundären Verbindungen (150) und einem jeweiligen der Ultraschallsensorelemente (140) zu verbinden; und

den Impulsgeber (115a) anweist, einen elektrischen Impuls über die primäre Zweileiterverbindung (130), den jeweiligen der einzelnen Schalter (126) und die jeweilige der sekundären Verbindungen (150) an das jeweilige der Ultraschallsensorelemente (140) zu übertragen.

8. System (100) nach Anspruch 7, wobei das Stromsignal und das Schaltbefehlssignal eine Dauer zwischen etwa 1 Millisekunde bis 5 Sekunden und einen Spannungsbereich von 1,8-5,0 V aufweisen, und der elektrische Impuls eine Dauer von etwa 50 Nanosekunden bis 10 Mikrosekunden und einen Spannungsbereich von 10-300 V aufweist, wobei bevorzugt das Stromsignal und das Schaltbefehlssignal eine Dauer zwischen etwa 10 Millisekunden bis 300 Millisekunden und eine Spannung von etwa 3,3 V aufweisen, und der elektrische Impuls eine Dauer von etwa 100 Nanosekunden und einen Spannungsbereich von etwa 30-90 V aufweist.

9. System (100) nach Anspruch 8, das weiter einen Impulsempfänger (1115b) umfasst, der so konfiguriert ist, dass er in Reaktion auf den vom Impulsgeber (115a) erzeugten elektrischen Impuls eine oder mehrere reflektierte Wellen empfängt, bevorzugt das Ultraschallmesssystem (110) den Impulsempfänger (115b) beinhaltet, und bevorzugt der Impulsgeber (115a) und der Impulsempfänger (115b) kombiniert sind.

**10.** System (100) nach Anspruch 1, wobei die primäre Zweileiterverbindung (130) und die sekundären Verbindungen (150) Kabel sind, die zwei Leiterbahnen aufweisen, bevorzugt die Kabel Koaxialkabel sind.

**11.** System (100) nach Anspruch 1, wobei sich das Multiplexer-Schaltermodul (120) vom Ultraschallmesssystem (110) entfernt befindet, bevorzugt weiter eine Vielzahl von primären Zweileiterverbindungen (130) und eine Vielzahl von Multiplexer-Schaltermodulen (120), die eine Vielzahl von einzelnen Schaltern (126) beinhalten, umfassend, wobei jedes Multiplexer-Schaltermodul (120) durch eine jeweilige der primären Zweileiterverbindungen (130) mit dem Ultraschallmesssystem (110) verbunden ist.

**12.** System (100) nach Anspruch 1, wobei sich das Multiplexer-Schaltermodul (120) in der Nähe des Ultraschallmesssystems (110) befindet; oder jedes Ultraschallsensorelement (140) ein Ultraschallwandler ist, bevorzugt der Ultraschallwandler ein piezoelektrisches Element beinhaltet.

**13.** System (100) nach Anspruch 1, das weiter ein oder mehrere Temperatursensorelemente (300) umfasst, wobei jedes Temperatursensorelement (300) operativ einem jeweiligen der Ultraschallsensorelemente (140) zum Messen einer Temperatur der Anlage (200) an oder nahe einer Lage des jeweiligen der Ultraschallsensorelemente (140) zugeordnet ist.

**14.** Verfahren zum Überwachen einer Dicke einer Anlage (200), das von einem System nach einem der vorstehenden Ansprüche durchgeführt wird, wobei das Verfahren die folgenden Schritte umfasst:

Senden des Stromsignals entlang der primären Zweileiterverbindung (130) vom Ultraschallmesssystem (110) an die Stromspeichereinheit (122) des Multiplexer-Schaltermoduls (120), um das Multiplexer-Schaltermodul (120) mit Strom zu versorgen; Senden des Schaltbefehlssignals entlang der primären Zweileiterverbindung (130) vom Ultraschallmesssystem (110) an die Steuereinheit (124) des Multiplexer-Schaltermoduls (120), um den einzelnen Schalter (126) des Multiplexer-Schaltermoduls (120) zu schließen, wobei der einzelne Schalter (126) die primäre Zweileiterverbindung (130) elektrisch mit der sekundären Verbindung (150) verbindet, die an dem Ultraschallsensorelement (140) endet, das operativ der Anlage (200) zugeordnet ist; und Übertragen des elektrischen Impulses entlang der primären Zweileiterverbindung (130) vom Ultraschallmesssystem (110) an den einzelnen Schalter (126), entlang der sekundären Verbindung (150) und an das Ultraschallsensorelement (140), um das Ultraschallsensorelement (140) zu veranlassen, die Ultraschallwelle zu erzeugen.

**15.** Verfahren nach Anspruch 14, das weiter den Schritt des Blockierens des elektrischen Impulses von der Steuereinheit (124) und der Stromspeichereinheit (122) des Multiplexer-Schaltermoduls (120) mit Hochspannungsschutzschaltungen (121) umfasst; und

weiter den Schritt des Messens einer Temperatur der Anlage (200) mit einem Temperatursensorelement (300) umfassend, das operativ dem Ultraschallsensorelement (140) zugeordnet ist; und weiter den Schritt des Empfangens einer oder mehrerer reflektierter Wellen mit einem Impulsempfänger (115b) umfassend, wobei die reflektierten Wellen in Reaktion auf den vom Impulsgeber (115a) erzeugten elektrischen Impuls erzeugt werden.

**Revendications**

**1.** Système (100) pour surveiller une épaisseur d'un ou de plusieurs équipements (200), le système (100) comprenant :

un système de mesure ultrasonore (110) ; de multiples éléments de détection ultrasonore (140), chaque élément de détection ultrasonore (140) étant éloigné du système de mesure ultrasonore (110), les éléments de détection ultrasonore (140) étant configurés pour être associés fonctionnellement aux un ou plusieurs équipements (200) ; un module de commutateur multiplexeur (120) incluant de multiples commutateurs individuels (126) ; une seule connexion primaire à deux conducteurs (130), la connexion primaire à deux conducteurs (130) présentant seulement un premier et un second conducteur (131, 132) et étant ainsi configurée en tant que câble avec seulement deux conducteurs, la connexion primaire à deux conducteurs (130) connectant le système de mesure ultrasonore (110) et le module de commutateur multiplexeur (120) ; et

une ou plusieurs connexions secondaires (150), chaque connexion secondaire (150) incluant des premier et second conducteurs (151, 152), chaque connexion secondaire (150) étant connectée à un respectif des commutateurs individuels (126) du module de commutateur multiplexeur (120) et à un respectif des éléments de détection ultrasonore (140) ;

dans lequel le système de mesure ultrasonore (110) est configuré pour envoyer des signaux et des impulsions au module de commutateur multiplexeur (120) le long de la connexion primaire à deux conducteurs (130), le module de commutateur multiplexeur (120) est configuré pour recevoir les signaux et commander les commutateurs individuels (126) entre des positions ouverte et fermée, le module de commutateur multiplexeur (120) est en outre configuré pour permettre aux impulsions envoyées par le système de mesure ultrasonore (110) de communiquer avec les éléments de détection ultrasonore (140) lorsqu'un respectif des commutateurs individuels (126) est dans un état fermé.

**2.** Système (100) selon la revendication 1, dans lequel le module de commutateur multiplexeur (120) inclut un dispositif de commande (124) configuré pour commander sélectivement un commutateur individuel (126) des multiples commutateurs individuels (126), et le module de commutateur multiplexeur (120) inclut une unité de stockage d'énergie (122) connectée électriquement au connecteur primaire à deux conducteurs (130).

**3.** Système (100) selon la revendication 2, dans lequel l'unité de stockage d'énergie électrique (122) est connectée électriquement au dispositif de commande (124) et aux commutateurs individuels (126), et le premier conducteur (131) de la connexion primaire à deux conducteurs (130) est connecté électriquement aux commutateurs individuels (126) en parallèle.

**4.** Système (100) selon la revendication 3, dans lequel le premier conducteur (131) ou le second conducteur (132) de la connexion primaire à deux conducteurs (130) est mis en œuvre en utilisant une connexion de mise à la terre ; et le premier conducteur (151) ou le second conducteur (152) de la connexion secondaire (150) est mis en oeuvre en utilisant une mise à la terre.

**5.** Système (100) selon la revendication 3, dans lequel le module de commutateur multiplexeur (120) inclut une circuiterie de protection haute-tension (121) disposé entre le dispositif de commande (124) et la connexion primaire à deux conducteurs (130), de préférence la circuiterie de protection haute-tension (121) comprend un filtre passe-bas.

**6.** Système (100) selon la revendication 3, dans lequel le système de mesure ultrasonore (110) comprend :

une alimentation électrique (111) ; un transmetteur d'impulsion (115a) ; et un dispositif de commande (112) connecté fonctionnellement à l'alimentation électrique (111) et au transmetteur d'impulsion (115a).

**7.** Système (100) selon la revendication 6, dans lequel le dispositif de commande (112) du système de mesure ultrasonore (110) est configuré pour :

ordonner à l'alimentation électrique (111) de transmettre un signal d'alimentation électrique, le long de la connexion primaire à deux conducteurs (130), à l'unité de stockage d'énergie électrique (122) du module de commutateur multiplexeur (120) ;

transmettre un signal d'instruction de commutation, le long de la connexion primaire à deux conducteurs (130), au module de commutateur multiplexeur (120), lequel le signal d'instruction de commutation (191) amène un des commutateurs individuels (126) à connecter la connexion primaire à deux conducteurs (130) à une respective des connexions secondaires (150) et à un respectif des éléments de détection ultrasonore (140) ; et

ordonner au transmetteur d'impulsion (115a) de transmettre une impulsion électrique à l'un respectif des éléments de détection ultrasonore (140) par l'intermédiaire de la connexion primaire à deux conducteurs (130), de l'un respectif des commutateurs individuels (126) et de l'une respective des connexions secondaires (150).

**8.** Système (100) selon la revendication 7, dans lequel le signal d'alimentation électrique et le signal d'instruction de commutation présentent une durée comprise entre approximativement 1 milliseconde et 5 secondes et une plage de tension de 1,8 à 5,0 V et l'impulsion électrique présente une durée d'approximativement 50 nanosecondes à 10 microsecondes et une plage de tension de 10 à 300 V, dans lequel de préférence le signal d'alimentation électrique et le signal d'instruction de commutation présentent une durée comprise entre approximativement 10 millisecondes et 300 millisecondes et une tension d'approximativement 3,3 V et l'impulsion électrique présente une durée d'approximativement 100 nanosecondes et une plage de tension d'approximativement 30 à 90 V.

**9.** Système (100) selon la revendication 8, comprenant en outre un récepteur d'impulsion (1115b) qui est configuré pour recevoir une ou plusieurs ondes réfléchissantes en réponse à l'impulsion électrique générée par le transmetteur d'impulsion (115a), de préférence le système de mesure ultrasonore (110) inclut le récepteur d'impulsion (115b) et, de préférence, le transmetteur d'impulsion (115a) et le récepteur d'impulsion (115b) sont combinés.

10. Système (100) selon la revendication 1, dans lequel la connexion primaire à deux conducteurs (130) et les connexions secondaires (150) sont des câbles présentant deux chemins conducteurs, de préférence les câbles sont des câbles coaxiaux.

11. Système (100) selon la revendication 1, dans lequel le module de commutateur multiplexeur (120) est situé à distance du système de mesure ultrasonore (110), comprenant en outre de préférence une pluralité de connexions primaires à deux conducteurs (130) et une pluralité de modules de commutateur multiplexeur (120) incluant une pluralité de commutateurs individuels (126), chaque module de commutateur multiplexeur (120) étant connecté au système de mesure ultrasonore (110) par une respective des connexions primaires à deux conducteurs (130).

12. Système (100) selon la revendication 1, dans lequel le module de commutateur multiplexeur (120) est situé à proximité du système de mesure ultrasonore (110) ; ou chaque élément de détection ultrasonore (140) est un transducteur ultrasonore, de préférence le transducteur ultrasonore inclut un élément piézoélectrique.

13. Système (100) selon la revendication 1, comprenant en outre un ou plusieurs éléments de détection de température (300), chaque élément de détection de température (300) étant associé fonctionnellement à un respectif des éléments de détection ultrasonore (140) pour mesurer une température de l'équipement. (200) au niveau ou à proximité d'un emplacement de l'élément respectif des éléments de détection ultrasonore (140).

14. Procédé de surveillance d'une épaisseur d'un équipement (200) réalisé par un système selon l'une quelconque des revendications précédentes, le procédé comprenant les étapes consistant à :

envoyer le signal d'alimentation électrique, le long de la connexion primaire à deux conducteurs (130), depuis le système de mesure ultrasonore (110), à l'unité de stockage d'énergie électrique (122) du module de commutateur multiplexeur (120) pour alimenter le module de commutateur multiplexeur (120) ;

envoyer le signal d'instruction de commutation, le long de la connexion primaire à deux conducteurs (130), depuis le système de mesure ultrasonore (110), au dispositif de commande (124) du module de commutateur multiplexeur (120) pour fermer l'interrupteur individuel (126) du module de commutateur multiplexeur (120), selon lequel le commutateur individuel (126) connecte électriquement la connexion primaire à deux conducteurs (130) à la connexion secondaire (150) qui se termine au niveau de l'élément de détection ultrasonore (140) qui est fonctionnellement associé à l'équipement (200) ; et transmettre l'impulsion électrique, le long de la connexion primaire à deux conducteurs (130), depuis le système de mesure ultrasonore (110), au commutateur individuel (126), le long de la connexion secondaire (150), et à l'élément de détection ultrasonore (140) pour amener l'élément de détection ultrasonore (140) à générer l'onde ultrasonore.

15. Procédé selon la revendication 14, comprenant en outre l'étape consistant à bloquer l'impulsion électrique provenant du dispositif de commande (124) et de l'unité de stockage d'énergie électrique (122) du module de commutateur multiplexeur (120) avec une circuiterie de protection haute-tension (121) ; et

comprenant en outre l'étape consistant à mesurer une température de l'équipement (200) avec un élément de détection de température (300) qui est fonctionnellement associé à l'élément de détection ultrasonore (140) ; et comprenant en outre l'étape consistant à recevoir une ou plusieurs ondes réfléchissantes avec un récepteur d'impulsion (115b), lesquelles ondes réfléchissantes sont générées en réponse à l'impulsion électrique générée par le transmetteur d'impulsion (115a).

FIG. 1

*Fig. 2*

FIG.3

Voltage

190

191

192

193

194

time

FIG. 4

FIG. 5

FIG. 7

FIG. 6

FIG. 8

FIG. 9

**EP 3 857 166 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004255678 A1
- US 2016109411 A1
- JP H11118457 A
- US 2011245677 A1